# EUROPEAN PATENT SPECIFICATION

(11) **EP 3 376 061 B1**
(45) Date of publication and mention of the grant of the patent: **06.01.2021**
(21) Application number: 15908277.5
(22) Date of filing: 10.11.2015
(51) Int. Cl.: F16C 17/10, F16C 33/26, F16C 17/18, F16C 33/58

(54) **SLIDING BEARING**
GLEITLAGER
PALIER LISSE

(43) Date of publication of application: 19.09.2018
(73) Proprietor: Harmonic Drive Systems Inc., Shinagawa-ku Tokyo 140-0013 (JP)
(72) Inventor: KOBAYASHI Masaru, Azumino-shi Nagano 399-8305 (JP)
(74) Representative: TBK
(86) International application number: PCT/JP2015/081633
(87) International publication number: WO 2017/081753

(56) References cited:
- EP-A1- 0 381 336
- EP-A1- 3 358 219
- JP-A- H02 203 011
- JP-A- 2002 031 150
- JP-U- H0 622 621
- US-A- 3 698 773
- US-A- 5 820 270

## Description

### TECHNICAL FIELD

The present invention relates to a sliding bearing that can bear a moment load.

### BACKGROUND ART

There is known a support bearing for supporting the input shaft or the output shaft of a strain wave gearing as an example of bearings that are used in portions where a moment load is applied. It is generally recommended that a duplex angular ball bearing be used for an input side and that a duplex angular ball bearing, a four-point contact ball bearing, a cross roller bearing et al be used for an output side. In Patent documents 1 and 2, a strain wave gearing in which a cross roller bearing or a four-point contact ball bearing is used for the output side is described.

It is necessary for a rolling-type bearing having balls or rollers to be provided with lubricant, and a seal mechanism is therefore required. In addition, a large viscus resistance of the lubricant, a large frictional resistance of the oil-seal rip part of the seal mechanism or the like cause to degrade the efficiency of a strain wave gearing during high-speed operation.

In order to solve these defects, it is conceivable to use a sliding bearing that can bear a moment load in place of a rolling-type bearing. This enables to improve the efficiency during high-speed operation of a strain wave gearing and reduce vibration/noise thereof, and furthermore lubrication free can be achieved.

A flange-type duplex bearing as disclosed in Patent documents 3 and 4 is known as a sliding bearing that can bear a moment load.

The sliding bearing of this type is provided with a sliding bearing element made of metal et al, the element having an L-shaped extending in the radial direction and the thrust direction. Patent document 5 shows another conventional sliding bearing.

However, a sliding bearing as can bear a moment load has not been proposed that has a sufficient load capacity and a compact configuration.

### PRIOR ART DOCUMENT

### PATENT DOCUMENT

Patent document 1: JP 2002 031150 A
Patent document 2: JP 2005 308131 A
Patent document 3: JP 2013 019517 A
Patent document 4: JP 2013 096534 A
Patent document 5: US 3 698 773 A

### SUMMARY OF THE INVENTION

### PROBLEMS TO BE SOLVED BY THE INVENTION

An object of the present invention is to provide a sliding bearing having a compact configuration that can bear a moment load.

### MEANS OF SOLVING THE PROBLEMS

The object is achieved by a sliding bearing having the features of claim 1. Further advantageous developments of the present invention are set out in the dependent claims.

In order to solve the above problems, a sliding bearing of the present invention is characterized by including:
an outer ring;
an inner ring concentrically disposed inside the outer ring;
an outer-ring-side V groove formed over an entire circumference on an inner peripheral surface of the outer ring;
an inner-ring-side V groove formed over an entire circumference on an outer peripheral surface of the inner ring;
an annular raceway having four raceway surfaces defined by the outer-ring-side V groove and the inner-ring-side V groove; and
a sliding body accommodated in the raceway,
wherein an outer peripheral surface of the sliding body is in contact with the raceway surfaces in a slidable state, respectively,
and the sliding body is formed of an endless coil spring.

In the consideration of easiness of assembly, the outer ring is preferably constituted by two divided outer rings that can separate in a direction of a bearing center axis line.

In the present invention, an endless coil spring is used for the sliding body. An annular body having a rectangular cross-section or a rhomboid cross-section can also be used for the sliding body. In this case, it is sufficient for the cross-section of the sliding body to be set so that four sides of the sliding body are in surface contact with the four raceway surfaces.

In the consideration of easiness of assembly, it is preferable, as the sliding body, to employ a plurality of arc-shaped members that are obtained by dividing an annular member into plural elements in the circumferential direction.

The above-constituted sliding bearing is preferably used as a support bearing for supporting the rigid internally toothed gear and the flexible externally toothed gear of a strain wave gearing in a state in which the gears are free to relatively rotate.

### BRIEF DESCRIPTION OF THE DRAWINGS

FIG. 1 includes a half cross-sectional view showing an example of a sliding bearing according to the present invention, an enlarged partial cross-sectional view thereof, and perspective views showing a sliding member according to the present invention and a non-claimed example of a sliding member;
FIG. 2 includes a half cross-sectional view showing another example of a sliding bearing not part of the invention and a perspective view showing a sliding member thereof; and
FIG. 3 includes a longitudinal cross-sectional view showing an example of a strain wave gearing in which the sliding bearing of FIG. 1 is assembled, and an end view thereof.

### MODE FOR CARRYING OUT THE INVENTION

An embodiment of a sliding bearing according to the present invention and a non-claimed example will be described hereinafter with reference to the drawings.

### (Embodiment)

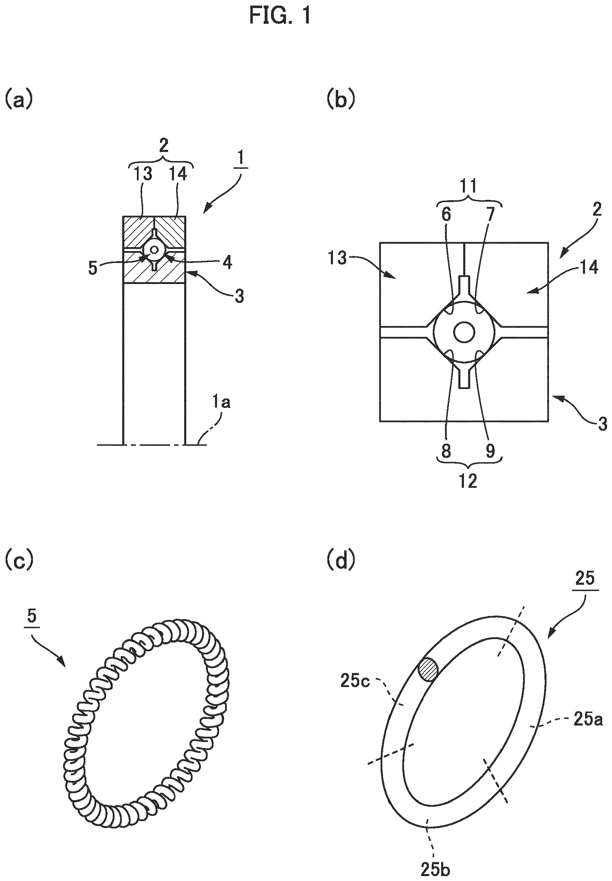

FIGS. 1(a) and 1(b) are a half cross-sectional view and an enlarged partial cross-sectional view showing a sliding bearing according to the Embodiment, and FIGS. 1(c) and 1(d) are perspective views showing two examples of a siding body thereof.

As shown in FIGS. 1(a) and 1(b), a sliding bearing 1 is provided with an outer ring 2 and an inner ring 3 concentrically disposed inside the outer ring. An annular raceway 4 is formed between the outer ring 2 and the inner ring 3. An annular sliding body 5 is accommodated in the raceway 4. The raceway 4 has approximately a square cross-section and the sliding body 5 has a circular contour in the present example. The sliding body 5 inscribes first to fourth raceway surfaces 6 to 9 and is slidable along these raceway surfaces 6 to 9.

An outer-ring-side V groove 11 is formed over the entire circumference on the circular inner peripheral surface of the outer ring 2, in which one of the groove sides is the first raceway surface 6 and the other is the second raceway surface 7. In the same manner, an inner-ring-side V groove 12 is formed over the entire circumference on the circular outer peripheral surface of the inner ring 3, in which one of the groove sides is the third raceway surface 8 and the other is the fourth raceway surface 9.

The outer ring 2 of the present embodiment is divided into two at the center in the direction of the bearing center axis line 1a so as to be constituted by division outer rings 13 and 14. The division outer rings 13 and 14 have substantially a symmetrical shape, the first raceway surface 6 is formed on the division outer ring 13 and the second raceway surface 7 is formed on the division outer ring 14. The division outer rings 13 and 14 are fastened to fix together by fastening bolts (not shown) at prescribed intervals in the circumferential direction, whereby constituting the outer ring 2.

The sliding body 5 is formed of an endless coil spring as shown in FIG. 1(c). The coil winding diameter of the endless coil spring is set to have a dimension so that the spring is in a four-point contact with the first to fourth raceway surfaces 6 to 9. The spring is provided with a sufficient rigidity in the coil diameter direction by setting the winding density and the coil wire diameter in an appropriate manner. From the viewpoints of easiness of assembly or other factors, the sliding body 5 may be constituted by a plurality of arc-shaped coil springs that are obtained by dividing the endless coil spring into plural elements in the circumferential direction. Usually, three or more coil springs having an identical arc-shape are employed.

The above-mentioned sliding bearing 1 can be assembled as follows. First, the sliding body 5 is accommodated at the side of the V groove 12 of the inner ring 3. Next, the divided-type outer ring 2 is assembled and fastened by temporary bolts so as to form a prescribed preload state.

Here, FIG. 1(d) is a perspective view showing a non-claimed example of the sliding body 5. The sliding body 25 shown in this drawing is an annular rigid body having a circular cross-section. In this case, it is desirable for the viewpoint of easiness of assembly to employ arc-shaped sliding pieces that can be obtained by dividing the annular rigid body into plural, such as three or more, in the circumferential direction. For example, the sliding body 25 is divided into three at equal angular intervals as shown by dotted lines in the drawing. The thus-obtained three arc-shaped sliding pieces 25a to 25c are employed.

Thus, the sliding bearing 1 is formed with the raceway having the similar shape as that of a rolling-type cross roller bearing, and the sliding body is accommodated in the raceway. With this configuration, a compact sliding bearing that can bear radial load, thrust load and moment load can be realized.

### (Example)

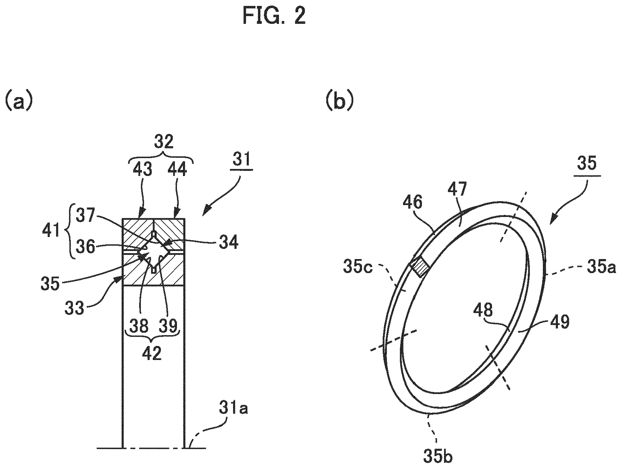

Next, FIG. 2(a) is a half cross-sectional view showing a sliding bearing according to a non-claimed example, and FIG. 2(b) is a perspective view showing the sliding body thereof.

A sliding bearing 31 has outer and inner rings 32 and 33 that are similar to the outer and inner rings 2 and 3 of the above-mentioned sliding bearing 1. The outer ring 32 is a divided-type outer ring constituted by division outer rings 43 and 44. The circular inner peripheral surfaces of the division outer rings 43 and 44 are respectively formed with a first raceway surface 36 and a second raceway surface 37. The division outer rings 43 and 44 are fastened to fix together, and a V groove 41 is formed defined by the first and second raceway surfaces 36 and 37 on the inner peripheral surfaces of the rings. A V groove 42 is formed defined by third and fourth raceway surfaces 38 and 39 on the circular outer peripheral surface of the inner ring 33. An annular sliding body 35 is disposed in a slidable state in an annular raceway 34 having a rectangular cross-section which is constituted by the V grooves 41 and 42.

As shown in FIG. 2(b), the sliding body 35 of the present example is an annular rigid body having a rectangular cross-section, in which the direction of one diagonal of the rectangular cross-section is in coincidence with the radial direction, and the direction of the other diagonal is in coincidence with the direction of the bearing center axis line 31a. The size of the rectangular cross-section of the sliding body 35 is almost the same as that of the rectangular cross-section of the raceway 34, so that the four outer peripheral surfaces 46 to 49 are in surface contact with the corresponding first to fourth raceway surfaces 36 to 39 of the raceway 34. It is also desirable, from the viewpoints of easiness of assembly or other factors, to employ arc-shaped sliding pieces that can be obtained by dividing the sliding body 35 into plural, such as three or more, in the circumferential direction. For example, the sliding body 35 is divided into three at equal angular intervals as shown by dotted lines in the drawing. The thus-obtained three arc-shaped divided sliding pieces 35a to 35c are employed.

### (Materials for each part)

The outer rings 2, 32, and the inner rings 3, 33 may be formed from steel, stainless steel, plastics or other materials. Appropriate materials are chosen based on the compressive strength, Young's modulus, the linear expansion coefficient and other mechanical properties required for the sliding bearings 1 and 31.

The materials for the sliding bodies 5, 25 and 35 may be chosen in the consideration of wear resistance thereof against the outer and inner rings. Various surface treatments are also effective if necessary. In particular, RB ceramics (made by Sanwa-Yushi Co., Ltd.), which is high in strength and excellent in wear resistance, can be employed for the sliding bodies 25 and 35 shown in FIG. 1(d) and FIG. 2(b). RB ceramics has 180 to 300MPa in compressive strength and 10 to 15GPa in Young's modulus, which is described in US 5 916 499 A (JP 3 530 329 B2).

### (Example of strain wave gearing provided with a sliding bearing)

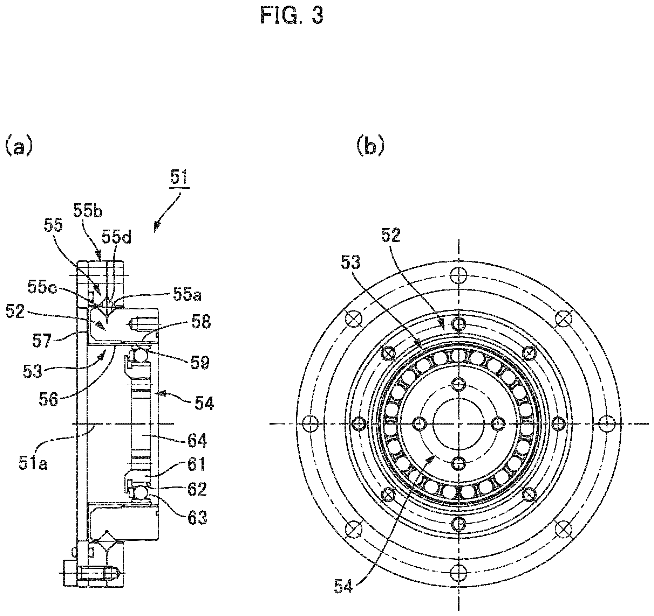

FIG. 3(a) is a longitudinal cross-sectional view showing an example of a top-hat-type strain wave gearing provided with a sliding bearing according to the present invention or the non-claimed example, and FIG. 3(b) is an end view thereof.

A strain wave gearing 51 is provided with an annular rigid internally toothed gear 52, a top-hat-shaped flexible externally toothed gear 53 coaxially disposed inside the rigid internally toothed gear, and a wave generator 54 fitted inside the flexible externally toothed gear 53. Further, a sliding bearing 55 is provided as a support bearing for supporting the flexible externally toothed gear 53 in a free rotating state relative to the rigid internally toothed gear 52. The sliding bearing 55 has the same structure as that of the sliding bearing 35 shown in FIG. 2, for example.

The flexible externally toothed gear 53 has a cylindrical body part 56 flexible in the radial direction, a diaphragm 57 extended outwardly and radially from one end of the cylindrical body part 56, and external teeth 58 formed on the outer peripheral surface portion at the side of the other open end of the cylindrical body part 56. The rigid internally toothed gear 52 supports the flexible externally toothed gear 53 in a state of free relative rotation via the sliding bearing 55. In this example, the inner-ring raceway surface 55a of the sliding bearing 55 is formed on the circular outer peripheral surface of the rigid internally toothed gear 52. The flexible externally toothed gear 53 is coaxially fastened to the outer ring 55b of the sliding bearing 55. Between the inner-ring raceway surface 55a (inner-ring-side V groove) and the outer-ring raceway surface 55c (outer-ring-side V groove), a sliding body 55d having an annular shape is accommodated in a slidable state.

The portion of the flexible externally toothed gear 53 where the external teeth 58 are formed is flexed into a non-circular shape, generally an ellipsoidal shape by the wave generator 54, so that portions of the external teeth 58 on both ends of the major axis of the ellipsoidal shape are in mesh with portions of the internal teeth 59 of the rigid internally toothed gear 52. The wave generator 54 is driven to rotate by a not-shown motor. The wave generator 54 has a rigid wave plug 61 and a wave bearing 63 that is mounted on the ellipsoidal wave-plug outer peripheral surface 62 of the wave plug 61 and is flexed ellipsoidally. A hollow part 64 is formed so that it passes through the center part of the wave plug 61 in the direction of the center axial line 51a.

When the wave generator 54 rotates, the meshing positions between the both gears 52 and 53 move in the circumferential direction. Because there is a difference in the number of teeth between the two gears 52 and 53, the sliding bearing 55 is caused to slide, whereby generating relative rotation between the both gears. The sliding bearing 55 can bear a radial load, a thrust load and a moment load applied during operation.

## Claims

1. A sliding bearing (1) comprising:
an outer ring (2);
an inner ring (3) concentrically disposed inside the outer ring (2);
an outer-ring-side V groove (11) formed over an entire circumference on an inner peripheral surface of the outer ring (2);
an inner-ring-side V groove (12) formed over an entire circumference on an outer peripheral surface of the inner ring (3);
an annular raceway (4) having four raceway surfaces (6, 7, 8, 9) defined by the outer-ring-side V groove (11) and the inner-ring-side V groove (12); and
a sliding body (5) accommodated in the raceway (4),
wherein an outer peripheral surface of the sliding body (5) is in contact with the respective raceway surfaces (6, 7, 8, 9) in a slidable state, and
the sliding body (5) is formed of an endless coil spring.

2. The sliding bearing (1) according to claim 1,
wherein the outer ring (2) is constituted by two division outer rings (13, 14) that can be separated in a direction of a bearing center axis line (1a).

3. The sliding bearing (1) according to claim 1,
wherein the endless coil spring is formed from a plurality of arc-shaped coil springs that are obtained by dividing an annular coil spring into plural elements in a circumferential direction.

4. A strain wave gearing (51) comprising:
a rigid internally toothed gear (52);
a flexible externally toothed gear (53);
a wave generator (54) for flexing the flexible externally toothed gear (53) into a non-circular shape to partially mesh with the rigid internally toothed gear (52), and for moving meshing positions between the both gears (52, 53) in a circumferential direction; and
a support bearing for supporting the rigid internally toothed gear (52) and the flexible externally toothed gear (53) in a state of free relative rotation,
wherein the support bearing is the sliding bearing (1) as set forth in claim 1.

## Patentansprüche

1. Gleitlager (1), mit:
einem Außenring (2);
einem Innenring (3), der in dem Außenring (2) konzentrisch angeordnet ist;
einer außenringseitigen V-Nut (11), die über einen gesamten Umfang auf einer Innenrandfläche des Außenrings (2) ausgebildet ist;
einer innenringseitigen V-Nut (12), die über einen gesamten Umfang einer Außenrandfläche des Innenrings (3) ausgebildet ist;
einer ringförmigen Laufbahn (4), die vier Laufbahnflächen (6, 7, 8, 9) hat, die durch die außenringseitige V-Nut (11) und die innenringseitige V-Nut (12) begrenzt sind; und
einem Gleitkörper (5), der in der Laufbahn (4) aufgenommen ist,
wobei eine Außenrandfläche des Gleitkörpers (5) mit den entsprechenden Laufbahnflächen (6, 7, 8, 9) in einem Gleitzustand in Kontakt ist, und
der Gleitkörper (5) aus einer Endlosspiralfeder ausgebildet ist.

2. Gleitlager (1) nach Anspruch 1, wobei
der Außenring (2) aus zwei Teilaußenringen (13, 14) besteht, die in einer Richtung einer Lagermittelachsenlinie (1a) getrennt werden können.

3. Gleitlager (1) nach Anspruch 1,
wobei die Endlosspiralfeder aus einer Vielzahl von bogenförmigen Spiralfedern ausgebildet ist, die erlangt werden, indem eine ringförmige Spiralfeder in mehrere Elemente in einer Umfangsrichtung geteilt wird.

4. Wellgetriebe (51), mit:
einem starren innenverzahnten Zahnrad (52);
einem biegsamen außenverzahnten Zahnrad (53);
einem Wellgenerator (54) zum Biegen des flexiblen außenverzahnten Zahnrades (53) in eine nicht kreisförmige Gestalt, um mit dem starren innenverzahnten Zahnrad (52) teilweise zu kämmen, und zum Bewegen von Kämmpositionen zwischen den beiden Zahnrädern (52, 53) in einer Umfangsrichtung; und
einem Stützlager zum Stützen des starren innenverzahnten Zahnrades (52) und des flexiblen außenverzahnten Zahnrades (53) in einem Zustand einer freien relativen Drehung,
wobei das Stützlager das Gleitlager (1) gemäß Anspruch 1 ist.

## Revendications

1. Palier lisse (1) comprenant :
une bague externe (2) ;
une bague interne (3) disposée, de manière concentrique, à l'intérieur de la bague externe (2) ;
une rainure en V du côté de la bague externe (11) formée sur toute la circonférence sur une surface périphérique interne de la bague externe (2) ;
une rainure en V du coté de la bague interne (12) formée sur toute la circonférence sur une surface périphérique externe de la bague interne (3) ;
un chemin de roulement annulaire (4) ayant quatre surfaces de chemin de roulement (6, 7, 8, 9) définies par la rainure en V du côté de la bague externe (11) et la rainure en V du côté de la bague interne (12) ; et
un corps coulissant (5) logé dans le chemin de roulement (4),
dans lequel une surface périphérique externe du corps coulissant (5) est en contact avec les surfaces de chemin de roulement (6, 7, 8, 9) respectives dans un état de coulissement, et
le corps coulissant (5) est formé avec un ressort hélicoïdal sans fin.

2. Palier lisse (1) selon la revendication 1,
dans lequel la bague externe (2) est constituée par deux bagues externes de division (13, 14) qui peuvent être séparées dans une direction d'une ligne d'axe central de palier (1a).

3. Palier lisse (1) selon la revendication 1,
dans lequel le ressort hélicoïdal sans fin est formé à partir d'une pluralité de ressorts hélicoïdaux en forme d'arc qui sont obtenus en divisant un ressort hélicoïdal annulaire en plusieurs éléments dans une direction circonférentielle.

4. Engrenage à onde de déformation (51) comprenant :
un engrenage intérieurement denté rigide (52) ;
un engrenage extérieurement denté souple (53) ;
un générateur d'onde (54) pour fléchir l'engrenage extérieurement denté souple (53) en une forme non circulaire pour s'engrener partiellement avec l'engrenage intérieurement denté rigide (52) et pour déplacer des positions d'engrènement entre les deux engrenages (52, 53) dans une direction circonférentielle ; et
un palier de support pour supporter l'engrenage intérieurement denté rigide (52) et l'engrenage extérieurement denté souple (53) dans un état de rotation relative libre,
dans lequel le palier de support est le palier lisse (1) selon la revendication 1.
